# EUROPEAN PATENT SPECIFICATION

(11) **EP 3 462 840 B1**
(45) Date of publication and mention of the grant of the patent: **02.08.2023**
(21) Application number: 17733059.4
(22) Date of filing: 02.06.2017
(51) Int. Cl.: A01G 9/22

(54) **SCREENING DEVICE FOR A GLASSHOUSE**
ABSCHIRMUNGSVORRICHTUNG FÜR EIN GEWÄCHSHAUS
DISPOSITIF DE CRIBLAGE POUR UNE SERRE

(30) Priority: 03.06.2016 NL 2016892
(43) Date of publication of application: 10.04.2019
(73) Proprietor: Metaal- en Kunststoffen Industrie Snelder B.V., 3565 BB Utrecht (NL)
(72) Inventor: VAN ROEST, Willem Cornelis, 4301 HC Ijstelstein (NL)
(74) Representative: Hylarides, Paul Jacques
(86) International application number: PCT/NL2017/050361
(87) International publication number: WO 2017/209615

(56) References cited:
- EP-A2- 1 491 712
- WO-A1-03/106805
- BE-A3- 1 018 230
- CH-A- 192 088
- NL-C- 2 002 621
- US-A- 5 526 865
- US-A1- 2004 134 122

## Description

The invention relates to a screening device configured to be arranged on the support structure of a glasshouse or greenhouse for cultivating a crop, the screening device comprising a beam to be supported by the support structure and a fabric screen which can be fastened to the beam.

The beams of the screening device are either stationary or movable relative to the support structure. By displacing the movable beam the fabric screen can be extended or collapsed in order to increase or decrease the amount of light entering the glasshouse or greenhouse (or exiting from the glasshouse or greenhouse). This displacement can be realized in known manner via one or more drive mechanisms. In many cases the support structure and said beams will be arranged first during construction of a glasshouse or greenhouse, and only then will the fabric screen be arranged.

There are numerous ways of arranging a fabric screen of a glasshouse or greenhouse on one or more of the stationary and/or movable beams of a screening device. Use is sometimes made of so-called separate screen clips with which the fabric screen can be clamped onto a beam at a limited number of different positions. The use of screen clips requires considerable human labour and is therefore often not preferred.

It is also known to provide the fabric screen with an elongate strip having arranged thereon a row of guide members which can be guided in(to) a recess in a profile. The recess however has a form such that the guide members tend to become jammed in the cavity. The known guide members further have a complex and specific form, and are expensive to manufacture. Arranging of the guide members further takes place just before the fabric screen in the greenhouse is pulled up. A specific machine is for this purpose necessary for each project, which is disadvantageous and is almost impossible to implement in practice.

The known ways of fastening of the fabric screen to the glasshouse all have the further drawback that the fastening between the fabric screen and the beams of the glasshouse will be lost quickly in the case of fire, and the fabric screen, which may or may not be burning, may fall down.

US 2004/134122 A1 describes a screen system with an elongate receiving chamber in which are housed a pull cable provided with a row of thickened portions and a screen edge provided with similar thickened portions. In the known screen system the screen is pulled actively into or out of a profile using the pull cable. The thickened portions of the screen edge herein function as engaging option for the pull cable. The receiving chamber further does not have a substantially round cross-section but is divided into a first passage for housing the pull cable and a second passage for housing the screen edge. The two passages are mutually connected via an elongate gap so that the thickened portions of the pull cable can engage on the thickened portions of the screen edge.

US 5 526 865 A describes a blind provided on either side with flexible lateral edges which can be guided in an elongate guiding track with a rectangular cross-section.

NL 2002621 C describes a shield system in which the form of the receiving chamber and the form of the protrusions of the shield edge of the shield web are so complex that manufacture thereof is expensive. The form is moreover such that the risk of jamming or of difficulty running during fastening or releasing of the shield web can be considered great.

In screens in which use is not made of pull cables or similar drive mechanisms for displacing the screen through an optionally stationary profile it is important that the screen is able to run in(to) the receiving chamber of the profile in sufficiently smooth manner.

It is an object to provide an improved screening device wherein at least one of the stated and/or other drawbacks of the prior art is obviated or is reduced.

It is also an object to provide a screening device which can be easily fastened to and/or removed from the beams of a glasshouse.

It is an object to provide a screening device which is better able to withstand fire.

It is also an object to provide a screening device with which the screen can run smoothly through the receiving chamber and/or wherein the screen has only a limited risk of becoming jammed or having difficulty running. It is a more general object to obtain a screening device with improved running properties.

According to a first aspect, at least one of the stated and/or other objects is achieved in a screening device which is configured to be arranged on the support structure of a glasshouse or greenhouse for cultivating a crop, the screening device comprising a beam to be supported by the support structure and a fabric screen which can be fastened to the beam, wherein the beam has a fastening part which extends in longitudinal direction and comprises an elongate receiving chamber with a substantially round cross-section and a slotted passage narrowed relative to the receiving chamber; and
wherein at least one of the longitudinal edges of the fabric screen is provided with at least one fastening member for fastening the fabric screen to the beam, wherein the fastening member comprises a fastening tape fixed to a longitudinal edge of the fabric screen and a row of fastening teeth arranged on the fastening tape, wherein each of the fastening teeth comprises a thickened portion suitable for being guided in(to) the receiving chamber in order to fasten the fastening member to the fastening part of the beam.

It has been found that when the receiving chamber has a round (for instance circular or oval) form in cross-section, the diameter of the thickened portions on the free outer ends of the fastening teeth is a minimum of about 0.5 mm and a maximum of about 2 mm smaller than the cross-section of the receiving chamber and the number of fastening teeth per running centimetre is greater than 2, the screening device has excellent running properties. The risk of becoming jammed is small and the screen can be displaced along the screen profile in smooth manner.

The teeth of the fastening member in combination with the round (for instance circular or oval) receiving chamber give the fastening of the fabric screen particularly good running properties, so that the fabric screen can be zipped into beams smoothly and with little chance of disruptions. The fastening teeth are further embodied to engage in the receiving chamber of the fastening part such that the fastening member is fixed on the beam in transverse direction and can be guided through the receiving chamber in longitudinal direction.

According to the invention the free outer end of each of the guide teeth is embodied with a thickened portion, wherein the diameter of the thickened portion is greater than the width of the passage in the fastening part, wherein a thickened portion has a substantially round or oval form in cross-section and/or wherein the receiving chamber has a substantially round or oval form in cross-section.

In order to realize a good and reliable guiding the diameter of thickened portions on the free outer ends of the fastening teeth is a minimum of about 0.5 mm and a maximum of about 2 mm smaller than the cross-section of the receiving chamber. It is further preferred to use a relatively large number of fastening teeth per unit of length. In an embodiment the number of fastening teeth per running centimetre is greater than 2, preferably greater than 5 or still more preferably greater than 10.

In a further embodiment the screening device comprises:
- a first beam to be supported by the support structure and having a first fastening part which extends in longitudinal direction and comprises an elongate first receiving chamber and a passage narrowed relative to the first receiving chamber;
- a second beam to be supported by the support structure and having a second fastening part which extends in longitudinal direction and comprises an elongate second receiving chamber and a passage narrowed relative to the second receiving chamber, wherein the second beam extends substantially parallel to the first beam;
wherein at least one of the beams takes a transversely displaceable form and wherein at least one of the longitudinal edges of the fabric screen is provided with at least one fastening member for fastening the fabric screen to at least one of the first and second beam.

In a determined embodiment the fastening tape is a woven tape. The use of a woven fabric has the advantage that it can be fixed to the fabric screen in simple manner, for instance by sewing or sealing the woven fabric. Use is preferably made of a woven fabric having a similar flexibility as that of the fabric screen. In other embodiments a stiffer fastening tape is applied in order to facilitate the threading in or zipping on of the fabric screen.

The longitudinal dimension of each of the fastening teeth (i.e. the characteristic width of a fastening tooth, for instance the size of the head of a fastening tooth) is preferably equal to or greater than the mutual longitudinal distance (i.e. the intermediate distance) between adjoining fastening teeth. This embodiment provides for a very smooth guiding of the fastening member in(to) the associated profile, with little chance of becoming jammed.

In determined embodiments the receiving chamber is integrated (for instance formed integrally) with the screen profile and/or truss profile. In other embodiments the receiving chamber is provided in a separate guide profile which can be fastened releasably to a screen profile and/or a truss profile. In these latter embodiments the screen can also be zipped onto existing profiles which were originally not provided with a receiving chamber.

The fastening member a one half of a zip fastening, i.e. a zip fastening without the usual slider and with only one instead of the usual two tapes provided with teeth.

According to a second aspect, a glasshouse for cultivating a crop is provided, wherein the glasshouse comprises a support structure on which is arranged at least one screening device according to any of the foregoing claims, as well as span wires tensioned between beams of the support structure for the purpose of supporting the fabric screen.

Further advantages, features and details of the invention will be elucidated on the basis of the following description of several embodiments thereof. Reference is made in the description to the accompanying figures, in which:
Figure 1 shows a schematic perspective view of a glasshouse (or greenhouse) placed on a surface and suitable for cultivating a crop therein, and provided with a number of screening devices according to different embodiments;
Figure 2 shows a cross-section through a first embodiment of a screening device;
Figure 3 shows a detail view of the first embodiment of figure 2;
Figures 4A and 4B show respective perspective views of a part of the first embodiment of the screening device, wherein figure 4A shows the situation before zipping in and figure 4B shows the situation during zipping in;
Figure 5 shows a perspective view of a second embodiment of a screening device, including two detail views;
Figures 6A- 6C show respectively a side view, a detail view A and a detail view B of the second embodiment.

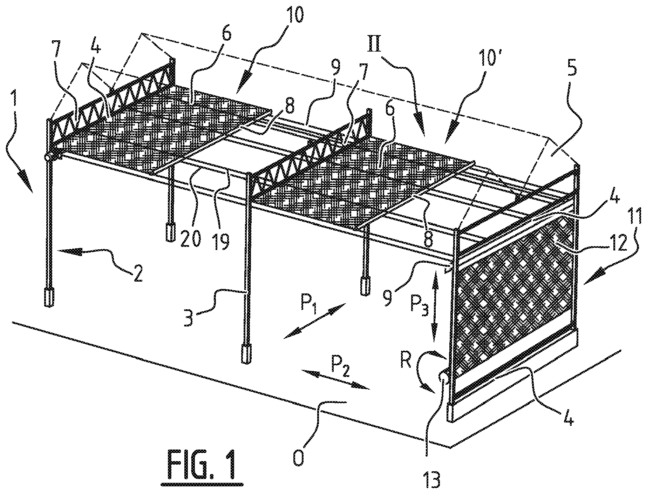

Figure 1 shows a surface (O) on which a support structure 2 of a glasshouse or greenhouse 1 is arranged. The support structure comprises a number of uprights and beams and is embodied to support a number of screening devices with which the light incidence on the crop cultivated in the glasshouse and/or the light exit from the greenhouse can be controlled. Support structure 2 can here also serve as support for the transparent outside walls and roofs 5, which are for instance constructed from a number of glass panels. In another embodiment, which is not shown, a separate support structure is however provided for this purpose.

In the shown embodiments support structure 2 comprises a number of vertical uprights 3 on which is arranged upright latticework (i.e. lattices 7) with a number of horizontal beams 4, 9, among other things. Beams 4, for instance in the form of truss profiles, extend in a longitudinal direction (direction P₁). Beams 9 extending in transverse direction (direction P₂) can also be provided. In the shown situation support structure 2 is provided with two horizontal screening devices 10, 10' for controlling the light entry/light exit of the roof and a vertical screening device 11 for controlling the light entry/exit of an end wall of the glasshouse. The usual other screening devices for the other outside walls are omitted from the drawing for the sake of clarity.

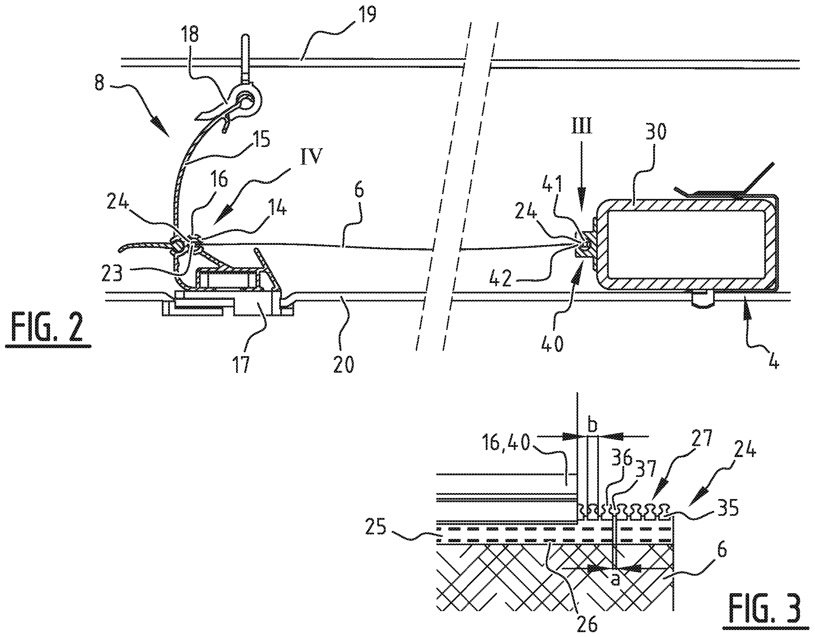

In respect of screening devices 10, 10', the truss profiles form so-called stationary longitudinal beams extending in the longitudinal direction of greenhouse 1. Arranged parallel to these stationary longitudinal beams 4 is a number of displaceable longitudinal beams 8, for instance in the form of screen profiles, i.e. one screen profile per screening device 10, 10'. These displaceable longitudinal beams 8 are displaceable in transverse direction (P₂) via a drive mechanism (not shown). A fabric screen 6 can be arranged between a stationary longitudinal beam 4 and a displaceable longitudinal beam 8. In the shown embodiment fabric screen 6 is arranged on longitudinal beams 4, 8 using fastening members 24 (figure 3) provided on either side of the fabric screen. The method of fastening the fabric screen to the longitudinal beams will be described below in more detail.

Examples of the above stated drive mechanism are the per se known push-pull system or the pull wire system. In a push-pull system the screen profile is operated via gear racks and push-pull tubes coupled to the screen profile. In a pull wire system a drive tube with clamping bushes, onto and from which steel cables are wound and unwound, provides for the horizontal movement of the screen profile between lattices 7. A number of sets of span wires 19, 20 extending parallel and in transverse direction is further arranged between lattices 7, particularly between beams 4. These span wires aid the guiding of the screen profile and also provide the option of supporting a fabric screen 6 thereon, for instance during mounting thereof on the beams. These span wires 19, 20 can be manufactured from polyester or, preferably, of flame-retardant material so as to avoid snapping of the span wires in a fire. An example of such a type of span wire is described in EP 1 790 213 A1, the content of which should be deemed as included herein.

Figure 1 further shows a vertical screening device 11. This screening device 11 comprises a fabric screen 12 which is arranged on a stationary beam 9 on one longitudinal side and is arranged on a rotatable roll tube 13 on the other, opposite longitudinal side. In a determined embodiment the rotatable roll tube can be provided internally with an electric motor, more particularly a tube motor, wherein the electric motor is provided with an engaging mechanism for engaging on a vertical roll tube guide (not shown), for instance a vertical rod disposed adjacently of one of the uprights 2. Operating the tube motor in roll tube 13 will set the roll tube into rotation (rotation direction R, figure 1) so that it is displaced upward or downward (direction P3) and fabric screen 12 is respectively rolled up or unrolled. Roll tube 13 hereby forms a displaceable longitudinal beam wherein the displacement (in this case in upward and downward direction instead of in horizontal direction) provides for the adjustment of the light entry into (or the light exit from) glasshouse 1.

An embodiment of a screening device 10, 10' is further elucidated in figures 2-4. Figure 2 shows a cross-section of a screening device comprising a stationary longitudinal beam 4 in the form of a truss profile 30, a movable longitudinal beam 8 in the form of a screen profile 15 and a fabric screen 6 arranged between the two longitudinal beams 4, 8. The movable longitudinal beam 8 comprises a screen profile 15 having a central, slightly curved profile part which is provided on a first longitudinal side with an elongate fastening part 16. This fastening part 16 forms part of (i.e. is integrated with) screen profile 15 and is embodied such that an elongate receiving chamber 23 running substantially along the whole length of screen profile 15 is formed, wherein a narrow, gap-like passage 14 is provided between receiving chamber 23 and the outside world. The width of the passage preferably has a substantially constant value over the whole length of the beam, for instance a value of between 1.0 mm and 2.0 mm or, preferably, between about 1.1-1.3 mm.

Screen profile 15 is further provided in known manner (on the opposite side) with a rubber seal 24, a lower wire guide 17 for guiding a lower span wire 20 and an upper wire guide 18 for guiding an upper span wire 19. Longitudinal beam 4 is likewise constructed from a stationary truss profile 30 provided on the side directed toward screen profile 15 with a fastening part 40. Fastening part 40 comprises an elongate receiving chamber 41 (corresponding to the receiving chamber 23 in screen profile 15) and a narrow (gap-like) passage 42 provided between receiving chamber 41 and the outside world.

A fastening member 24 of a fabric screen 6 can be arranged in each of the receiving chambers 23, 41 in the manner described below. Fastening member 24 is arranged along both longitudinal edges of fabric screen 6 and comprises one half of a zip. The fastening member 24 (zip) comprises a fastening tape 25 fixed to the longitudinal edge of fabric screen 6 and a row of fastening teeth 27 arranged on fastening tape 25. In the shown embodiment fastening tape 25 is a woven tape, for instance a woven cotton or polyester, and the woven fabric is sewn via stitching 26 to the longitudinal edge of screen 6. In other embodiments woven tape 25 is arranged on the fabric screen in other manner, for instance in a sealing process. In other embodiments the tape is further not formed from a fabric, but for instance formed from a strip of plastic or rubber.

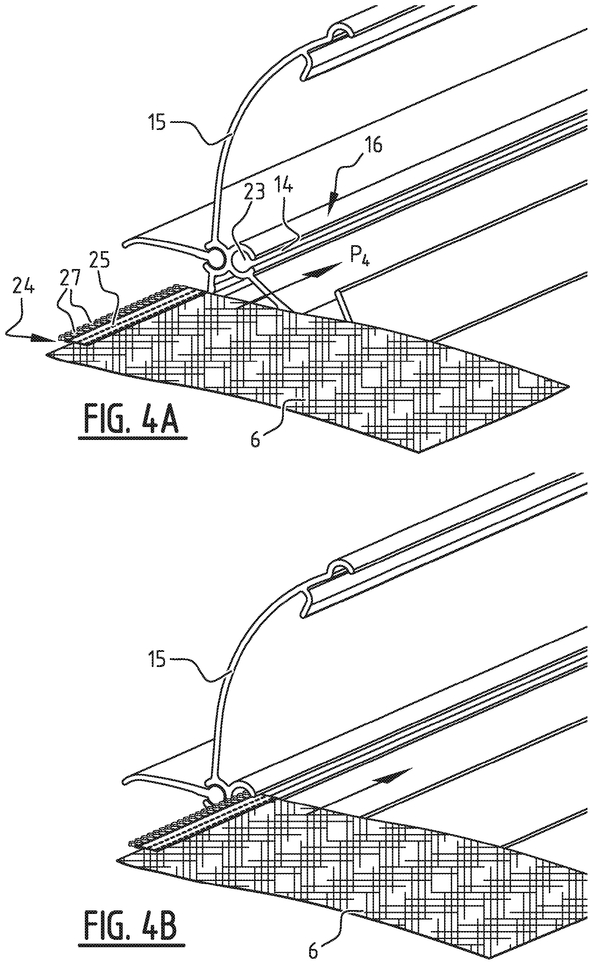

Each of the fastening teeth 27 of fastening member 24 comprises a foot 35, a neck 37 and a head 36. Head 36 is a thickened portion on the free outer ends of the fastening tooth. The thickened portion (head) is wider than the neck 37. In other words, the cross-section at the position of a thickened portion (head) is greater than that at the position of the neck. The dimensions of the thickened portion (head) 36 are further adjusted to the dimensions of the receiving chamber 23, 41, with the understanding that the head can be guided (displaced) freely therein, but wherein the thickened portion (head) is wider than the transverse dimensions of gap-like passage 14, 42, so that once the heads of the teeth have been arranged in fastening part 16, 40 by being slid in(to) chamber 23, 41 (direction P₄, figures 4A and 4B), this fastening member can no longer be displaced in a direction perpendicularly of the guiding direction (P₄). Arranging of fabric screen 6 on screen profile 15 and/or truss profile 30 can take place by simply zipping the fabric screen onto the profiles. Removing of the fabric screen from the profiles can take place in similar manner, for instance by displacing the fabric screen further in the same direction or in opposite direction.

The dimensions in longitudinal direction of each of the fastening teeth (i.e. the characteristic width of each of the teeth, for instance the width (b, figure 3) of the head of the tooth) is preferably equal to or greater than the mutual longitudinal distance between adjoining fastening teeth (for instance the longitudinal distance (a) at the position of foot 35). In determined embodiments the longitudinal dimension of fastening teeth is about 0.8 mm and the mutual distance between the fastening teeth is likewise 0.8 mm. An advantage of a tooth with a width equal to or greater than the intermediate distance is that the fabric screen can be displaced in the profiles more smoothly than when use is made of an integrally manufactured fastening member and/or when possible protrusions of the fastening member are arranged at a greater mutual distance.

The heads of the fastening teeth further take a form such that they have a cross-section of a maximum of 50% of the cross-section of the elongate receiving chamber. This also has the result that guidability of the fastening member through the receiving chamber is improved and/or the chance of it becoming jammed is small.

Although the fabric screen can be arranged on a first and a second longitudinal beam successively, it is also possible to arrange fabric screen 6 to both beams 4, 8 simultaneously. This reduces the assembly time of the screen considerably.

Because the fastening teeth of the fastening member can be easily pulled into the receiving chambers of the respective truss or screen profiles and a smooth guiding can be realized, the fabric screen need no longer be fastened with the usual screen clips, so that arranging of the fabric screen (or optionally removal thereof) can be performed in efficient manner. In order to enable a high degree of smoothness the fastening part is embodied such that the number of fastening teeth per unit of length is relatively great, greater than 2 fastening teeth per running centimetre, more preferably more than 5 or even more than 10 fastening teeth per running centimetre. The form and dimensions of the receiving chamber and those of the heads of the fastening teeth of the fastening element are further adapted to each other such that there is suitable play between the fastening teeth and the inner surface of the fastening part for realizing a good guiding. In other words, the receiving chamber is slightly bigger than the thickened portions (i.e. heads) on the free outer ends of the fastening teeth.

It has been found that the diameter of the heads of the fastening teeth have to be a minimum of about 0.5 mm and a maximum of about 2 mm smaller than the cross-section of the receiving chamber in order to be able to realize a particularly good guiding with a small chance of disruptions. The maximum thickness of the fastening member is preferably smaller than 5 mm and still more preferably smaller than 2 mm in order to limit the overall thickness when a fabric screen is rolled up.

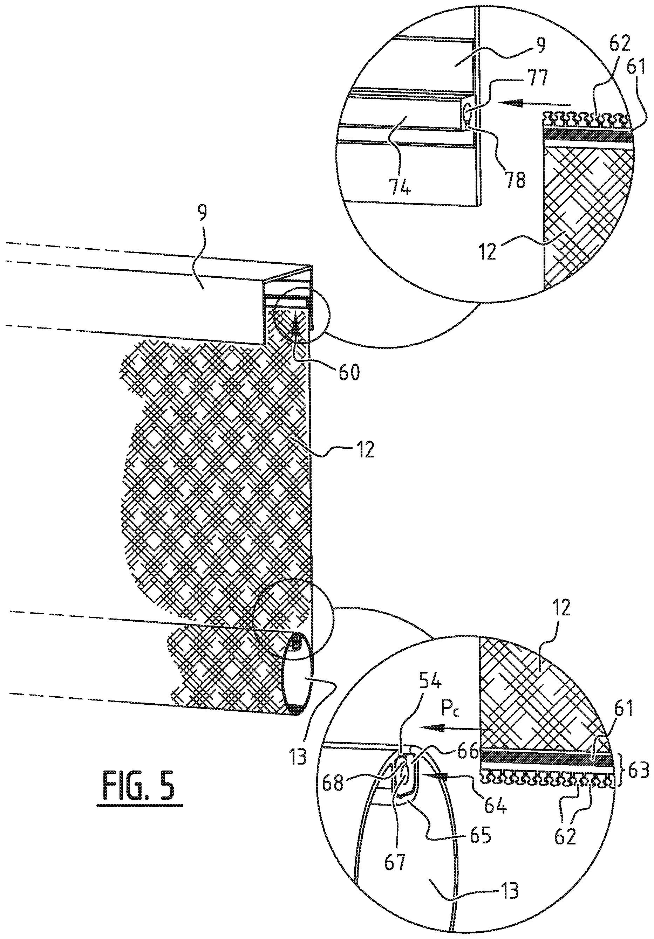

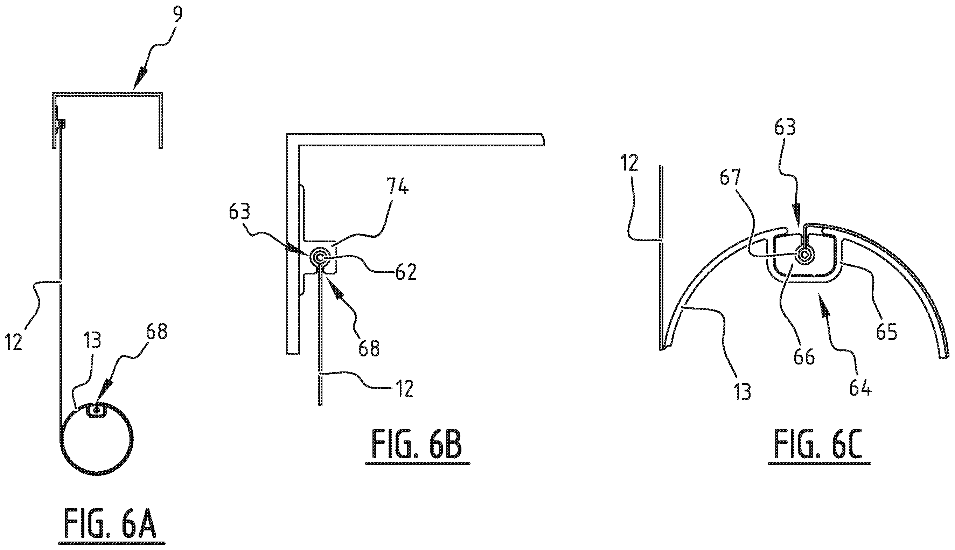

Figures 5, 6A-6C show an embodiment of the fastening of fabric screen 12 of the vertical screening device 11 of figure 1. The two longitudinal edges 60 of fabric screen 12 are provided in similar manner as described above with one half of a zip, comprising a fastening tape 61 provided with a large number of teeth 62. Fastening tape 61 and fastening teeth 62 together form fastening member 63. A fastening member 63 can be slid in(to) an elongate fastening part 64 in roll tube 13 or in(to) an elongate fastening part 74 on beam 9 in similar manner as described above.

Fastening part 64 comprises an inward protruding profile part 65 and a guide profile 66 fixed separately therein. Guide profile 66 comprises an elongate chamber 67 and a gap-like passage 68 provided between chamber 67 and the outside world. A gap-like passage 54 is arranged in the cylindrical wall of roll tube 13 at the same location. It is hereby possible to simply fasten fabric screen 12 to the movable beam (i.e. roll tube 13) by sliding teeth 62 of fastening member 63 in(to) receiving chamber 67. In similar manner fastening part 74 of stationary beam 9 comprises an elongate chamber 77 and a gap-like passage 78 provided between chamber 77 and the outside world. It is hereby possible to fasten fabric screen 12 to stationary beam 9 by sliding teeth 62 of fastening member 63 in(to) receiving chamber 77.

The figures show the embodiment in which fabric screen 6, 12 takes a single-layer form. It will be apparent that fabric screen 6, 12 takes a multi-layer (for instance double-layer) form in other embodiments. In the case of a double-layer fabric screen the longitudinal edges can for instance be arranged on either side of a fastening tape of the fastening member (wherein the fastening tape is thus sandwiched between the two longitudinal edges), for instance by sewing or sealing it.

The support structure and beams of the screen device can comprise profiles manufactured from plastic, galvanized steel and/or aluminium. The fastening teeth are often manufactured from plastic or metal. It has been found that, despite the difference in material (for instance metal fastening teeth which are guided in a steel or aluminium profile), the guidability of the fastening member along the profile is good.

In a further embodiment it is possible to embody the woven tape of the fastening member in flame-extinguishing material. This flame-extinguishing material ensures that the fabric screen remains fastened to the beams for longer in the case of fire or similar calamities. An example of flame-extinguishing material is that wherein the material of the fastening member (the zip) is manufactured from for instance nylon or polyester to which an additive is added, for instance an additive as described in the document EP 1 790 213 A1, which document should be deemed as included herein. An example of a suitable flame-extinguishing material is polyester with a Cesa^{®} additive (for instance 8% additive).

The truss and/or screen profiles can be manufactured from aluminium or plastic, in other embodiments they are made from a galvanized steel rolled profile. In all these cases a receiving chamber can be provided in the profile itself for the purpose of receiving the fastening member. As already stated above in respect of the embodiment of figures 5-6, in other embodiments there may be a separate guide profile which is fastened releasably to the screen profile and/or the truss profile. When use is for instance made of a type of screen profile/truss profile which corresponds to the screen/truss profile according to figures 1-4 but which is not provided with an integrated fastening part, the guide profile (which forms the fastening part) can be fastened to the screen/truss profile so that a receiving chamber with passage becomes available for fastening of the fastening member of a fabric screen. In this way existing profiles can also be adapted and made suitable for receiving the fastening members afterwards (retrofit), so also when no receiving chamber is present.

Because the fabric screen is provided on one or more longitudinal sides with a fastening member, it is the case that the fabric screen is reinforced on this side, so that the technical properties of the fabric screen also remain more or less intact after retraction. This construction further prevents the fabric screen being pulled up incorrectly, and therefore reduces the chance that the woven fabric thereof is pulled apart and the functioning of the fabric screen is reduced.

The screening device makes it possible to realize an assembly without tension, so that the fabric is able to expand at all times and possible shrinkage is absorbed in simple manner. Fewer folds in the fabric are further necessary, whereby a small and compact fabric screen package can be realized and, as a result hereof, less light interception will potentially take place. Zipping in of the fabric screen can take place after completion of almost the whole installation. This will generally result in less contamination of the fabric screen occurring during arranging thereof on the support structure.

The described structure can be applied inter alia in the screening installations described hereinbelow: horizontal screening installations with a single screen and a single-layer fabric screen, horizontal screening installations with a single screen and a double-layer fabric screen, horizontal double screening installations with a single screen with single-layer screen fabric on both installations, horizontal double screening installations with a single screen with double-layer fabric screen on both installations, horizontal triple screening installations with a single screen with single-layer fabric screen on all three installations, horizontal triple screening installations with a single screen with double-layer fabric screen on all three installations, a roller blind installation wherein the fabric bands of the roller blind are provided with a zip on both sides, a double roller blind installation wherein the fabric bands of the roller blind are provided with a zip on both sides.

The present invention is not limited to the embodiments thereof described herein. The rights sought are defined by the following claims.

## Claims

1. Screening device (10, 10') configured to be arranged on the support structure of a glasshouse or greenhouse for cultivating a crop, the screening device comprising a beam (4) to be supported by the support structure and a fabric screen (6) which can be fastened to the beam,
wherein the beam has a fastening part (40) which extends in longitudinal direction and comprises an elongate receiving chamber (41) with a substantially round cross-section and a slotted passage narrowed relative to the receiving chamber; and
wherein at least one of the longitudinal edges of the fabric screen is provided with at least one fastening member (24) for fastening the fabric screen to the beam, wherein the fastening member comprises a fastening tape (25) fixed to a longitudinal edge of the fabric screen and a row of fastening teeth (27) arranged on the fastening tape, wherein each of the fastening teeth comprises a thickened portion (36) suitable for being guided in(to) the receiving chamber (41) in order to fasten the fastening member to the fastening part of the beam,
wherein the fastening member is formed from one half of a zip fastening wherein the diameter of thickened portions on the free outer ends of the fastening teeth of the zip fastening is greater than the width of the passage in the fastening part (40) and is a minimum of about 0.5 mm and a maximum of about 2 mm smaller than the cross-section of the receiving chamber and
wherein the number of fastening teeth per running centimetre is greater than 2, preferably greater than 5 or still more preferably greater than 10.

2. Screening device as claimed in claim 1, wherein the heads of the fastening teeth have a cross-section of a maximum of 50% of the cross-section of the elongate receiving chamber.

3. Screening device as claimed in claim 1 or 2, wherein each of the guide teeth comprises a thickened portion formed for being slidable in(to) the receiving chamber, wherein the thickened portion has a substantially round or oval form in cross-section and/or wherein the receiving chamber has a substantially round or oval form in cross-section.

4. Screening device as claimed in any of the foregoing claims, comprising:
- a first beam to be supported by the support structure and having a first fastening part which extends in longitudinal direction and comprises an elongate first receiving chamber and a passage narrowed relative to the first receiving chamber;
- a second beam to be supported by the support structure and having a second fastening part which extends in longitudinal direction and comprises an elongate second receiving chamber and a passage narrowed relative to the second receiving chamber, wherein the second beam extends substantially parallel to the first beam;
wherein at least one of the beams takes a transversely displaceable form and wherein at least one of the longitudinal edges of the fabric screen is provided with at least one fastening member for fastening the fabric screen to at least one of the first and second beam.

5. Screening device as claimed in any of the foregoing claims, wherein the fastening tape is a woven tape, wherein the woven tape is preferably sewn to the fabric screen.

6. Screening device as claimed in any of the foregoing claims, wherein the longitudinal dimension of each of the fastening teeth is equal to or greater than the mutual longitudinal distance between adjoining fastening teeth.

7. Screening device as claimed in any of the foregoing claims, wherein the first beam comprises a transversely displaceable screen profile and/or the second beam comprises a stationary truss profile.

8. Screening device as claimed in claim 7, wherein the receiving chamber is integrated with the screen profile and/or truss profile.

9. Screening device as claimed in claim 7, wherein the receiving chamber is provided in a separate guide profile which can be fastened releasably to a screen profile and/or a truss profile.

10. Screening device as claimed in any of the foregoing claims, wherein the one or more beams comprise a profile of plastic, galvanized steel and/or aluminium.

11. Screening device as claimed in any of the foregoing claims, wherein the fastening teeth are manufactured from plastic or metal.

12. Screening device as claimed in any of the foregoing claims, wherein the fastening member is manufactured from flame-retardant plastic material, preferably from flame-extinguishing material.

13. Screening device as claimed in any of the foregoing claims, wherein the fabric screen takes a single-layer or double-layer form.

14. Screening device as claimed in any of the foregoing claims, wherein the screening device is configured to open and close a substantially vertically extending fabric screen and/or wherein the screening device comprises:
- an upper stationary beam wherein the fastening part is configured to receive the upper end edge of the fabric screen;
- a lower beam which is displaceable in up and downward direction and wherein the fastening part is configured to receive the lower end edge of the fabric screen, wherein the displaceable beam is a roll tube provided with an electric motor, wherein the electric motor comprises an engaging mechanism embodied to engage on a roll tube guide arranged on the support structure.

15. Glasshouse for cultivating a crop, the glasshouse comprising:
- a support structure on which is arranged at least one screening device as claimed in any of the foregoing claims;
- span wires tensioned between beams of the support structure for supporting the fabric screen.

## Patentansprüche

1. Schirmvorrichtung (10, 10'), ausgebildet, um an dem Tragwerk eines Glashauses oder Gewächshauses zum Anbau einer Kulturpflanze angeordnet zu werden, wobei die Schirmvorrichtung einen von dem Tragwerk getragenen Träger (4) sowie einen Gewebeschirm (6), an welchem der Träger befestigt werden kann, umfasst,
wobei der Träger ein sich in Längsrichtung erstreckendes Befestigungsteil (40) aufweist, mit einer länglichen Aufnahmekammer (41) mit einem im Wesentlichen runden Querschnitt sowie einem relativ zur Aufnahmekammer verengten geschlitzten Durchgang; und
wobei zumindest eine der Längskanten des Gewebeschirmes, zum Befestigen des Gewebeschirmes an dem Träger, mit zumindest einem Befestigungselement (24) versehen ist, wobei das Befestigungselement ein an einer Längskante des Gewebeschirmes befestigtes Befestigungsband (25) aufweist, mit einer Reihe von auf dem Befestigungsband angeordneten Befestigungszähnen (27), wobei jeder der Befestigungszähne einen verdickten Abschnitt (36) aufweist, welcher geeignet ist, in die Aufnahmekammer (41) (ein)geführt zu werden, um das Befestigungselement an dem Befestigungsteil des Trägers zu befestigen,
wobei das Befestigungselement aus einer Hälfte eines Reißverschlusses gebildet ist, wobei der Durchmesser der verdickten Abschnitte an den freien äußeren Enden der Befestigungszähne des Reißverschlusses größer ist als die Breite des Durchgangs in dem Befestigungsteil (40) und mindestens etwa 0,5 mm und höchstens etwa 2 mm kleiner als der Querschnitt der Aufnahmekammer ist, und wobei die Anzahl der Befestigungszähne pro laufendem Zentimeter größer als 2, vorzugsweise größer als 5 oder noch bevorzugter größer als 10 beträgt.

2. Schirmvorrichtung nach Anspruch 1, wobei die Köpfe der Befestigungszähne einen Querschnitt von maximal 50 % des Querschnitts der länglichen Aufnahmekammer aufweisen.

3. Schirmvorrichtung nach Anspruch 1 oder 2, wobei jeder der Befestigungszähne einen verdickten Abschnitt aufweist, der so ausgebildet ist, dass er in der Aufnahmekammer verschiebbar ist, wobei der verdickte Abschnitt im Querschnitt eine im Wesentlichen runde oder ovale Form aufweist, und/oder wobei die Aufnahmekammer im Querschnitt eine im Wesentlichen runde oder ovale Form aufweist.

4. Schirmvorrichtung nach einem der vorherigen Ansprüche, aufweisend:
- einen ersten Träger, der von dem Tragwerk zu tragen ist und einen ersten Befestigungsteil aufweist, welcher sich in Längsrichtung erstreckt und eine längliche erste Aufnahmekammer sowie einen gegenüber der ersten Aufnahmekammer verengten Durchgang aufweist,
- einen zweiten Träger, der von dem Tragwerk zu tragen ist und einen zweiten Befestigungsteil aufweist, welcher sich in Längsrichtung erstreckt und eine längliche zweite Aufnahmekammer sowie einen gegenüber der zweiten Aufnahmekammer verengten Durchgang aufweist, wobei sich der zweite Träger im Wesentlichen parallel zu dem ersten Träger erstreckt;
wobei zumindest einer der Träger eine quer verschiebbare Form aufweist, und wobei zumindest eine der Längskanten des Gewebeschirmes zur Befestigung des Gewebeschirmes an zumindest einem der ersten und zweiten Träger mit zumindest einem Befestigungselement versehen ist.

5. Schirmvorrichtung nach einem der vorherigen Ansprüche, wobei das Befestigungsband ein gewebtes Band darstellt, wobei das gewebte Band vorzugsweise mit dem Gewebeschirm vernäht ist.

6. Schirmvorrichtung nach einem der vorherigen Ansprüche, wobei die Längsabmessung jedes der Befestigungszähne gleich oder größer ist als der gegenseitige Längsabstand benachbarter Befestigungszähne.

7. Schirmvorrichtung nach einem der vorherigen Ansprüche, wobei der erste Träger ein quer verschiebbares Schirmprofil und/oder der zweite Träger ein stationäres Traversenprofil aufweist.

8. Schirmvorrichtung nach Anspruch 7, wobei die Aufnahmekammer in das Schirmprofil und/oder das Traversenprofil integriert ist.

9. Schirmvorrichtung nach Anspruch 7, wobei die Aufnahmekammer in einem separaten Führungsprofil vorgesehen ist, welches lösbar an einem Schirmprofil und/oder an einem Traversenprofil befestigt werden kann.

10. Schirmvorrichtung nach einem der vorherigen Ansprüche, wobei der eine oder die mehreren Träger ein Profil aus Kunststoff, verzinktem Stahl und/oder Aluminium aufweisen.

11. Schirmvorrichtung nach einem der vorherigen Ansprüche, wobei die Befestigungszähne aus Kunststoff oder Metall gefertigt sind.

12. Schirmvorrichtung nach einem der vorherigen Ansprüche, wobei das Befestigungselement aus flammhemmendem Kunststoff, vorzugsweise aus flammlöschendem Material, gefertigt ist.

13. Schirmvorrichtung nach einem der vorherigen Ansprüche, wobei der Gewebeschirm einlagig oder zweilagig ausgebildet ist.

14. Schirmvorrichtung nach einem der vorherigen Ansprüche, wobei die Schirmvorrichtung so ausgebildet ist, dass sie einen im Wesentlichen vertikal verlaufenden Gewebeschirm öffnet und schließt, und/oder wobei die Schirmvorrichtung aufweist:
- einen oberen stationären Träger, wobei das Befestigungselement zur Aufnahme der oberen Endkante des Gewebeschirmes ausgebildet ist;
- einen unteren Träger, der in Aufwärts- und Abwärtsrichtung verschiebbar ist, und bei dem das Befestigungselement so ausgebildet ist, dass es die untere Endkante des Gewebeschirmes aufnimmt, wobei der verschiebbare Träger ein mit einem Elektromotor versehenes Wickelrohr darstellt, wobei der Elektromotor einen Eingriffsmechanismus aufweist, der so ausgebildet ist, dass er mit einer an dem Tragwerk angeordneten Wickelrohr-Führung in Eingriff gelangt.

15. Glashaus für den Anbau einer Kulturpflanze, wobei das Glashaus aufweist:
- ein Tragwerk, auf dem zumindest eine Schirmvorrichtung nach einem der vorherigen Ansprüche angeordnet ist;
- Spanndrähte, die zwischen den Trägern des Tragwerks gespannt sind, um den Gewebeschirm zu tragen.

## Revendications

1. Dispositif de tamisage (10, 10') configuré pour être agencé sur la structure de support d'une serre pour cultiver une culture, le dispositif de tamisage comprenant un montant (4) devant être supporté par la structure de support et un tamis en tissu (6) qui peut être fixé au montant,
dans lequel le montant a une partie de fixation (40) qui s'étend dans une direction longitudinale et comprend une chambre de réception (41) allongée avec une coupe transversale sensiblement ronde et un passage rainuré rétréci par rapport à la chambre de réception ; et
dans lequel au moins un des bords longitudinaux du tamis en tissu est pourvu d'au moins un élément de fixation (24) pour fixer le tamis en tissu au montant, dans lequel l'élément de fixation comprend une bande de fixation (25) fixée à un bord longitudinal du tamis en tissu et une rangée de dents de fixation (27) agencées sur la bande de fixation, dans lequel chacune des dents de fixation comprend une portion épaissie (36) appropriée pour être guidée dans la chambre de réception (41) afin de fixer l'élément de fixation à la partie de fixation du montant,
dans lequel l'élément de fixation est formé à partir d'une moitié d'une fermeture à glissière dans lequel le diamètre de portions épaissies sur les extrémités extérieures libres des dents de fixation de la fermeture à glissière est plus grand que la largeur du passage dans la partie de fixation (40) et est au minimum environ 0,5 mm et au maximum environ 2 mm plus petit que la coupe transversale de la chambre de réception et dans lequel le nombre de dents de fixation par centimètre linéaire est plus grand que 2, de préférence plus grand que 5 ou de manière encore davantage préférée plus grand que 10.

2. Dispositif de tamisage selon la revendication 1, dans lequel les têtes des dents de fixation ont une coupe transversale d'au maximum 50 % de la coupe transversale de la chambre de réception allongée.

3. Dispositif de tamisage selon la revendication 1 ou 2, dans lequel chacune des dents de guidage comprend une portion épaissie formée pour pouvoir glisser dans la chambre de réception, dans lequel la portion épaissie a une forme sensiblement ronde ou ovale en coupe transversale et/ou dans lequel la chambre de réception a une forme sensiblement ronde ou ovale en coupe transversale.

4. Dispositif de tamisage selon l'une quelconque des revendications précédentes, comprenant :
- un premier montant devant être supporté par la structure de support et ayant une première partie de fixation qui s'étend dans une direction longitudinale et comprend une première chambre de réception allongée et un passage rétréci par rapport à la première chambre de réception ;
- un second montant devant être supporté par la structure de support et ayant une seconde partie de fixation qui s'étend dans une direction longitudinale et comprend une seconde chambre de réception allongée et un passage rétréci par rapport à la seconde chambre de réception, dans lequel le second montant s'étend sensiblement parallèlement au premier montant ;
dans lequel au moins un des montants prend une forme déplaçable transversalement et dans lequel au moins un des bords longitudinaux du tamis en tissu est pourvu d'au moins un élément de fixation pour fixer le tamis en tissu à au moins un du premier et du second montant.

5. Dispositif de tamisage selon l'une quelconque des revendications précédentes, dans lequel la bande de fixation est une bande tissée, dans lequel la bande tissée est de préférence cousue au tamis en tissu.

6. Dispositif de tamisage selon l'une quelconque des revendications précédentes, dans lequel la dimension longitudinale de chacune des dents de fixation est égale à ou plus grande que la distance longitudinale mutuelle entre des dents de fixation attenantes.

7. Dispositif de tamisage selon l'une quelconque des revendications précédentes, dans lequel le premier montant comprend un profil de tamis déplaçable transversalement et/ou le second montant comprend un profil de ferme immobile.

8. Dispositif de tamisage selon la revendication 7, dans lequel la chambre de réception est intégrée au profil de tamis et/ou au profil de ferme.

9. Dispositif de tamisage selon la revendication 7, dans lequel la chambre de réception est fournie dans un profil de guidage séparé qui peut être fixé de manière libérable à un profil de tamis et/ou à un profil de ferme.

10. Dispositif de tamisage selon l'une quelconque des revendications précédentes, dans lequel les un ou plusieurs montants comprennent un profil en plastique, acier galvanisé et/ou aluminium.

11. Dispositif de tamisage selon l'une quelconque des revendications précédentes, dans lequel les dents de fixation sont fabriquées à partir de plastique ou de métal.

12. Dispositif de tamisage selon l'une quelconque des revendications précédentes, dans lequel l'élément de fixation est fabriqué à partir d'une matière plastique ininflammable, de préférence à partir d'un matériau d'extinction de flammes.

13. Dispositif de tamisage selon l'une quelconque des revendications précédentes, dans lequel le tamis en tissu prend une forme monocouche ou bicouche.

14. Dispositif de tamisage selon l'une quelconque des revendications précédentes, dans lequel le dispositif de tamisage est configuré pour ouvrir et fermer un tamis en tissu s'étendant sensiblement verticalement et/ou dans lequel le dispositif de tamisage comprend :
- un montant immobile supérieur dans lequel la partie de fixation est configurée pour recevoir le bord d'extrémité supérieur du tamis en tissu ;
- un montant inférieur qui est déplaçable dans une direction vers le haut et vers le bas et dans lequel la partie de fixation est configurée pour recevoir le bord d'extrémité inférieur du tamis en tissu, dans lequel le montant déplaçable est un tube roulant pourvu d'un moteur électrique, dans lequel le moteur électrique comprend un mécanisme d'entrée en prise incorporé pour entrer en prise sur un guide de tube roulant agencé sur la structure de support.

15. Serre pour cultiver une culture, la serre comprenant :
- une structure de support sur laquelle est agencé au moins un dispositif de tamisage selon l'une quelconque des revendications précédentes ;
- des fils de tension tendus entre des montants de la structure de support pour supporter le tamis en tissu.
